# EUROPEAN PATENT APPLICATION

(11) **EP 4 549 792 A1**
(43) Date of publication of application: **07.05.2025**
(21) Application number: 23830408.3
(22) Date of filing: 29.06.2023
(51) Int. Cl.: F16K 31/04, F16K 27/02

(54) **COIL ASSEMBLY AND ELECTRIC VALVE**

(30) Priority: 01.07.2022 CN 202210773656; 26.07.2022 CN 202210882659
(71) Applicant: ZHEJIANG SANHUA AUTOMOTIVE COMPONENTS CO., LTD., Hangzhou, Zhejiang 310018 (CN)
(72) Inventor: PAN, Yiyuan, Hangzhou, Zhejiang 310018 (CN); FENG, Xinzhao, Hangzhou, Zhejiang 310018 (CN); LIN, Liheng, Hangzhou, Zhejiang 310018 (CN); CHEN, Xiaoge, Hangzhou, Zhejiang 310018 (CN)
(74) Representative: Maikowski & Ninnemann Patentanwälte Partnerschaft mbB
(86) International application number: PCT/CN2023/103858
(87) International publication number: WO 2024/002240

(57) **Abstract**

A coil assembly and an electric valve. The coil assembly (100) comprises a control box (1), the control box (1) comprising a first casing part (11) and a second casing part (12), wherein the first casing part (11) is fixedly connected to the second casing part (12); the second casing part (12) comprises a connection opening portion (122) and a first connection member (121); the connection opening portion (122) is provided with a second chamber (1221); the first connection member (121) is provided with a first end portion (1211) and a second end portion (1212); part of the first end portion (1211) is located in a first chamber (13); part of the second end portion (1212) is located in the second chamber (1221); the first end portion (1211) is connected to an electric control board (3) by means of a mode of press fitting; and the first connection member (121) can be in electric connection and/or in signal connection with the electric control board (3). Such arrangement helps to simplify the assembling of the coil assembly; meanwhile, when the number of first connection members (121) needs to be changed, developing a whole coil assembly again is not needed, which helps to reduce the development cost of coil assemblies, thereby reducing the development cost of electric valves.

## Description

The present application claims the priorities to Chinese Patent Application No. 202210773656.1, titled "COIL ASSEMBLY AND ELECTRIC VALVE", filed with the China National Intellectual Property Administration on July 1, 2022, and Chinese Patent Application No. 202210882659.9, titled "CONTROL DEVICE AND ELECTRIC VALVE", filed with the China National Intellectual Property Administration on July 26, 2022, the entire disclosures of which are incorporated herein by reference.

### FIELD

The present application relates to the technical field of fluid control, and in particular to a coil assembly and an electric valve.

### BACKGROUND

An electric valve includes a coil assembly, which includes a stator component, a control box and an electric control board. The electric control board is located in a space formed by the control box, and the control box includes a first housing portion and a second housing portion that are fixedly connected to each other. The first housing portion is provided with an insertion port portion, and the insertion port portion is provided with an insertion pin to be in an electrical connection or signal connection to an external device. The first housing portion is integrally formed on an injection molding body that is formed on a periphery of the stator component by injection molding, or may be fixed on the injection molding body by other means. When the number of the insertion pin needs to be changed, it is necessary to redevelop the first housing portion or a combination of the first housing portion and the stator component, which may increase the development cost of the coil assembly or the electric valve.

### SUMMARY

An object of the present application is to provide a coil assembly and an electric valve, which is beneficial to simplifying the assembly of the coil assembly and reducing the development cost of the coil assembly or the electric valve.

To achieve the above object, the following technical solutions are provided according to an embodiment of the present application.

A coil assembly includes a control box, a stator component and an electric control board. The control box is provided with a first chamber, and the electric control board is located in the first chamber. The stator component is provided with a first insertion pin that is connected to the electric control board. The control box includes a first housing portion and a second housing portion that are fixedly connected to each other. The second housing portion includes an insertion port portion and a first connector, and the insertion port portion is provided with a second chamber. The first connector is provided with a first end portion and a second end portion. A part of the first end portion is located in the first chamber, and a part of the second end portion is located in the second chamber. The first end portion is connected to the electric control board by press-fit, and the first connector is configured to be in an electrical connection and/or signal connection to the electric control board.

An electric valve includes the coil assembly described hereinabove, a valve component and a valve body block. The valve component is fixedly connected to the valve body block, and the coil assembly is fixedly connected to the valve body block or the valve component.

According to the embodiment of the present application, the control box includes the first housing portion and the second housing portion that are fixedly connected to each other. The second housing portion includes the insertion port portion and the first connector, and the insertion port portion is provided with the second chamber. The first connector is provided with the first end portion and the second end portion. A part of the first end portion is located in the first chamber, and a part of the second end portion is located in the second chamber. The first end portion is connected to the electric control board by press-fit, and the first connector is configured to be in an electrical connection and/or signal connection to the electric control board. With such arrangements, the assembly of the coil assembly can be simplified. Furthermore, there is no need to redevelop the entire coil assembly to change the number of the first connector. Therefore, the development cost of the coil assembly can be reduced, thereby reducing the development cost of the electric valve.

### BRIEF DESCRIPTION OF THE DRAWINGS

FIG. 1 is a schematic front view showing the structure of a first embodiment of a coil assembly according to the present application;
FIG. 2 is a schematic sectional view taken along a line A-A showing the structure of the coil assembly in FIG. 1;
FIG. 3 is a schematic sectional view taken along another line away from the line A-A showing the structure of the coil assembly in FIG. 1;
FIG. 4 is a schematic top view showing the structure of the coil assembly in FIG. 1 without a first housing portion;
FIG. 5 is a schematic top view showing the structure of the coil assembly in FIG. 1 without the first housing portion and an electric control board;
FIG. 6 is a schematic perspective view of the structure in FIG. 5 from another perspective;
FIG. 7 is a schematic front view showing the structure of the first housing portion in FIG. 1;
FIG. 8 is a schematic perspective view showing the structure of the first housing portion in FIG. 7 from another perspective;
FIG. 9 is a schematic sectional view taken along a line B-B showing the structure of the first housing portion in FIG. 7;
FIG. 10 is a schematic sectional view taken along another line away from the line B-B showing the structure of the first housing portion in FIG. 7;
FIG. 11 is a schematic front view showing the structure of an embodiment of an electric valve according to the present application;
FIG. 12 is a schematic sectional view taken along a line C-C showing the structure of the electric valve in FIG. 11;
FIG. 13 is a schematic front view showing the structure of another embodiment of the electric valve in FIG. 11;
FIG. 14 is a schematic sectional view showing the structure of another embodiment of the coil assembly from a perspective;
FIG. 15 is a schematic sectional view showing the structure of the coil assembly in FIG. 14 from another perspective;
FIG. 16 is a schematic perspective view showing the structure of an injection molding assembly from a perspective;
FIG. 17 is a schematic view showing the structure of the injection molding assembly in FIG. 16 from another perspective;
FIG. 18 is a schematic view showing the structure of the injection molding assembly in FIG. 16 from yet another perspective;
FIG. 19 is a schematic sectional view showing the structure of the injection molding assembly in FIG. 16 from the yet another perspective;
FIG. 20 is a schematic sectional view showing the structure of further another embodiment of the coil assembly from a perspective; and
FIG. 21 is a schematic sectional view showing the structure of further another embodiment of the coil assembly from a perspective.

### DETAILED DESCRIPTION OF THE EMBODIMENTS

The present application is further illustrated hereinafter in conjunction with the drawings and specific embodiments.

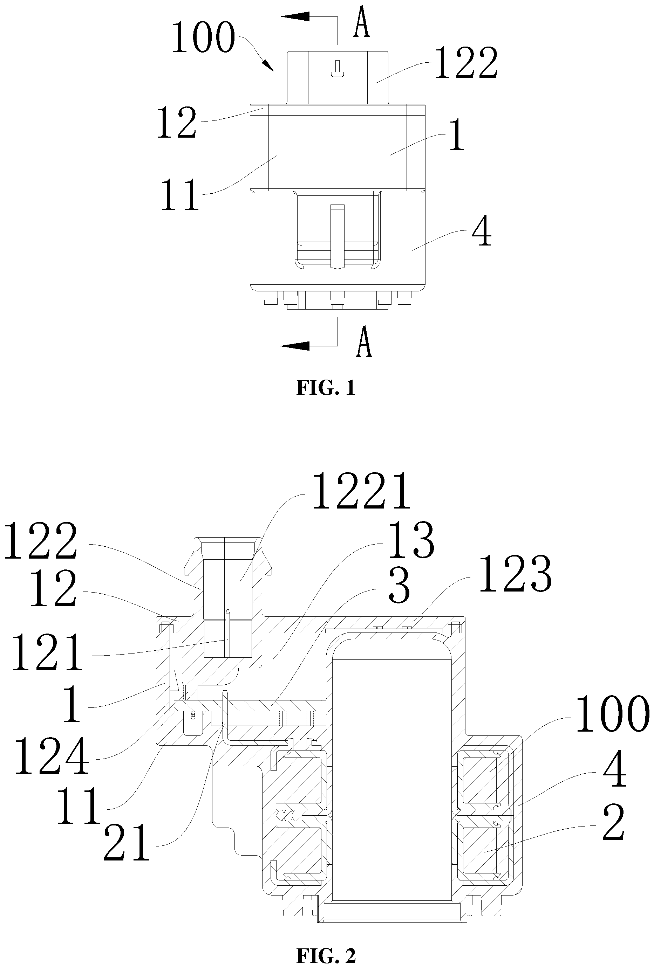

FIGS. 1 to 3 illustrate a first embodiment of a coil assembly 100. In the present embodiment, the coil assembly 100 includes a control box 1, a stator component 2 and an electric control board 3. The control box 1 is provided with a first chamber 13, and the electric control board 3 is located in the first chamber 13. The stator component 2 is provided with first insertion pins 21 that are connected to the electric control board 3. In the present embodiment, the first insertion pins 21 are fixed to the electric control board 3 by welding. Alternatively, in other embodiments, the fixation may be achieved by press-fit through press-fit pins, or by other means. One end of some of the first insertion pins 21 is connected to a winding inside the stator component 2, and the other end is connected to the electric control board 3. The number of the first insertion pins 21 may be determined according to needs. The control box 1 includes a first housing portion 11 and a second housing portion 12 that are fixedly connected to each other. In the present embodiment, the coil assembly 100 includes an injection molding portion 4 that covers at least a part of the stator component 2. In the present embodiment, the injection molding portion 4 and the first housing portion 11 are integrally formed by injection molding. Alternatively, in other embodiments, the injection molding portion 4 and the first housing portion 11 may be separately formed, and are then fixed to each other by welding or engagement, or by a screw. The second housing portion 12 includes a first connector 121 and an insertion port portion 122. The insertion port portion 122 is provided with a second chamber 1221, and the first connector 121 is provided with a first end portion 1211 and a second end portion 1212. A part of the first end portion 1211 is located in the first chamber 13, and a part of the second end portion 1212 is located in the second chamber 1221. The first end portion 1211 is connected to the electric control board 3 by press-fitting. The first end portion 1211 of the first connector 121 can be in an electrical connection or a signal connection to the electric control board 3, and the second end portion 1212 of the first connector 121 is configured to be in an electrical connection or a signal connection to an external device. With such arrangements, the first end portion 1211 is connected to the electric control board 3 by press-fit, so as to simplify the connection between the first connector 121 and the electric control board 3, thereby simplifying the connection between the first housing portion 11 and the second housing portion 12. Moreover, when changing the number of the first connector 121, there is no need to redesign the first housing portion 11 or a combination of the first housing portion 11 and the stator component 2. The only thing needed is a small change to the second housing portion 12 and the electric control board 3, such as changing the number of the first connector 121. That is, it is unnecessary to redevelop or redesign the entire coil assembly, which is beneficial to reducing the development cost of the coil assembly 100.

In the present embodiment, referring to FIG. 2, the electric control board 3 is arranged above the stator component 2, and a direction parallel to the electric control board 3 is defined as a horizontal direction. The directions in the present application only indicate relative positions.

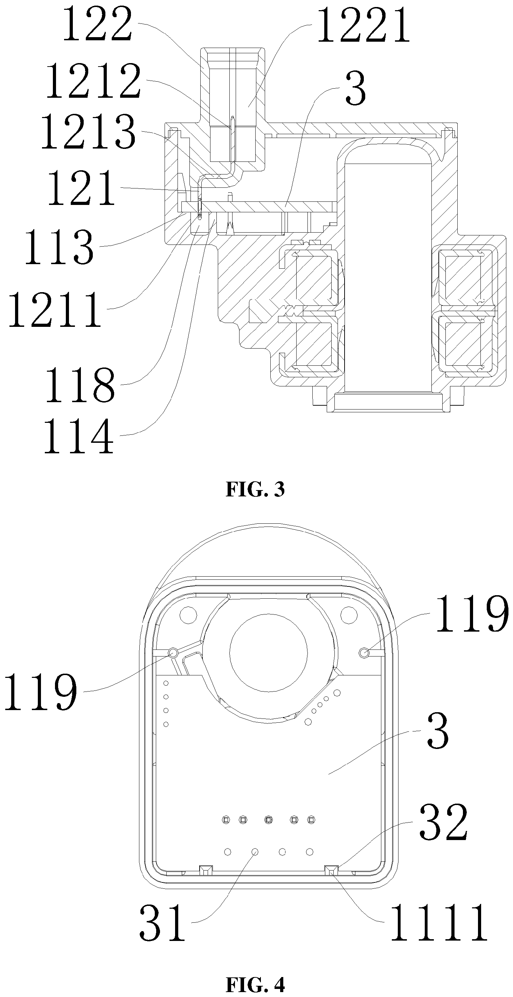

In conjunction with FIGS. 2 and 3, in the present embodiment, the first housing portion 11 and the second housing portion 12 are fixed to each other by welding, such as laser welding, ultrasonic welding and the like. Specifically, in the present embodiment, the first housing portion 11 and the second housing portion 12 are fixed to each other by laser welding, and are sealed by welding. Certainly, a seal may be further provided between the first housing portion 11 and the second housing portion 12. In other embodiments, the first housing portion 11 and the second housing portion 12 may be fixedly connected to each other by snap-fit, and may be sealed by a seal that is provided between the first housing portion 11 and the second housing portion 12.

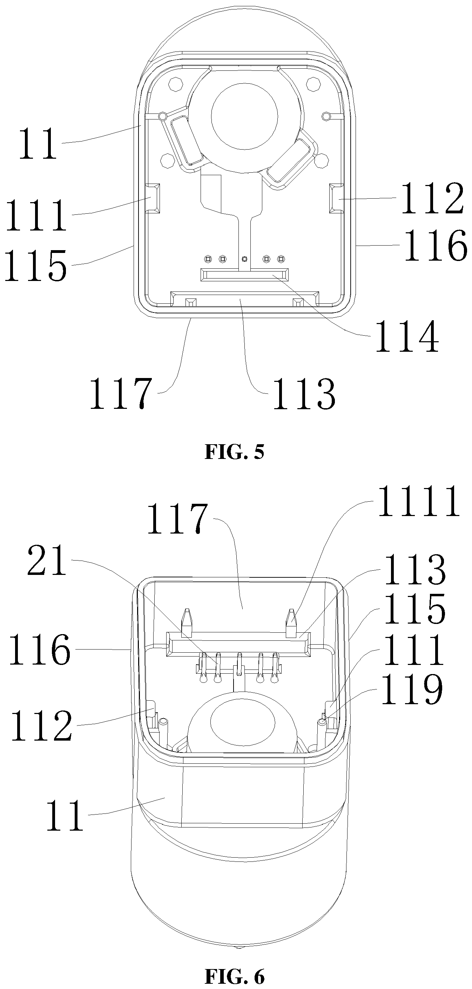

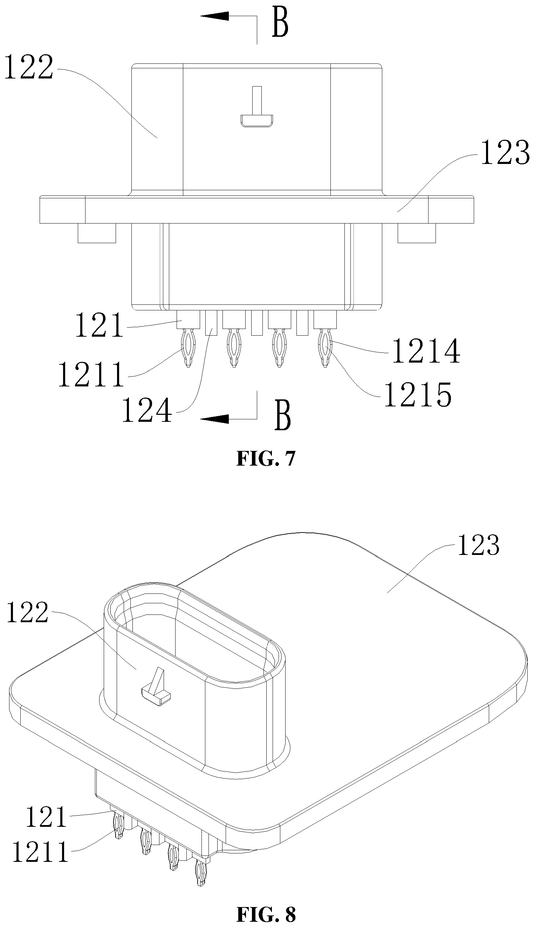

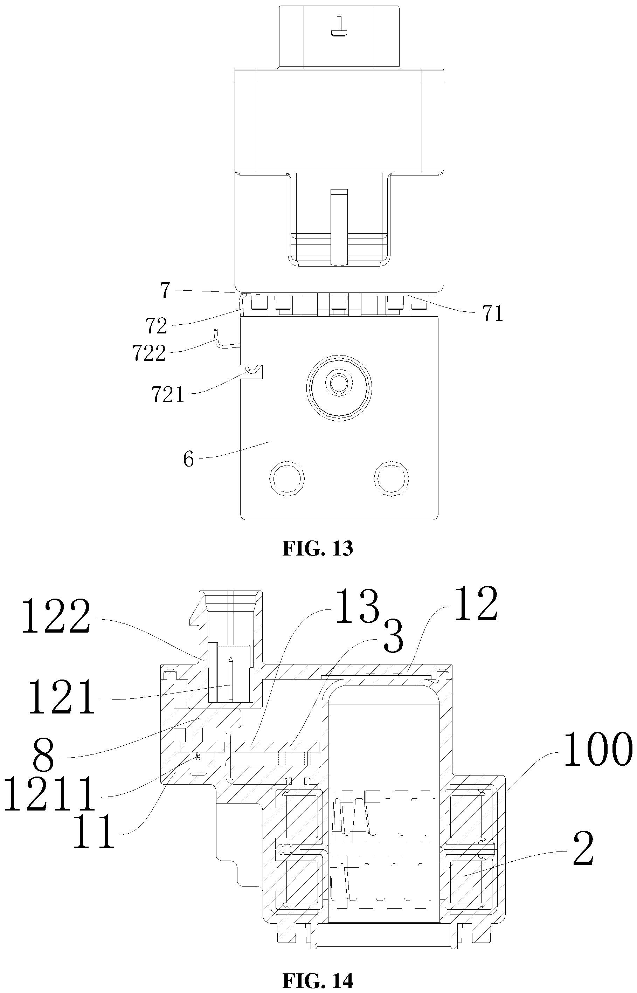

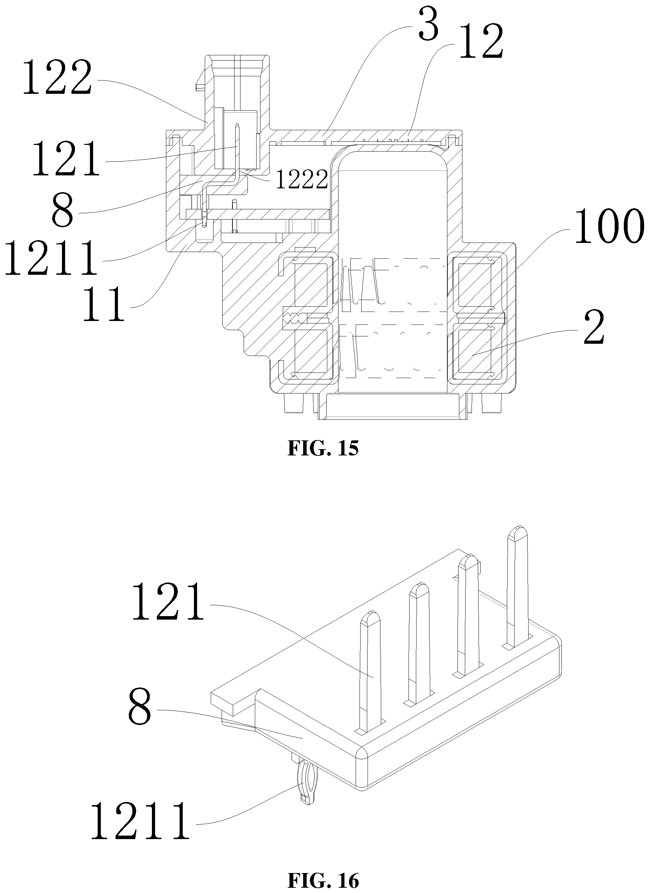

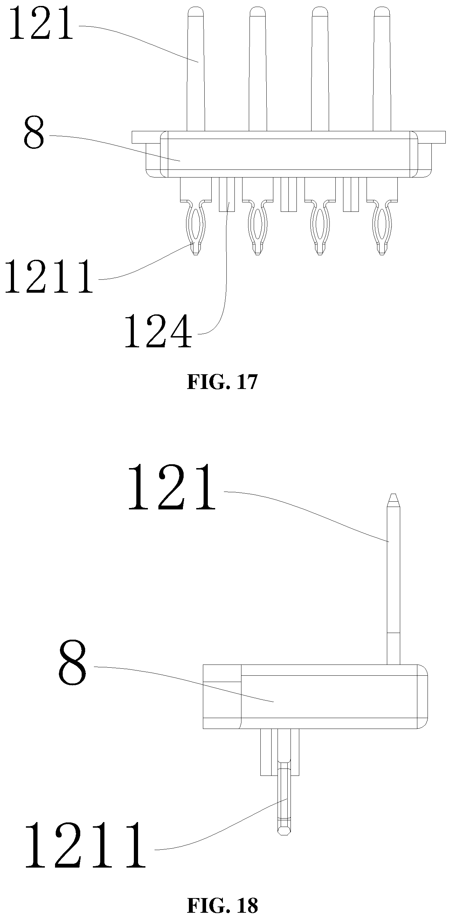

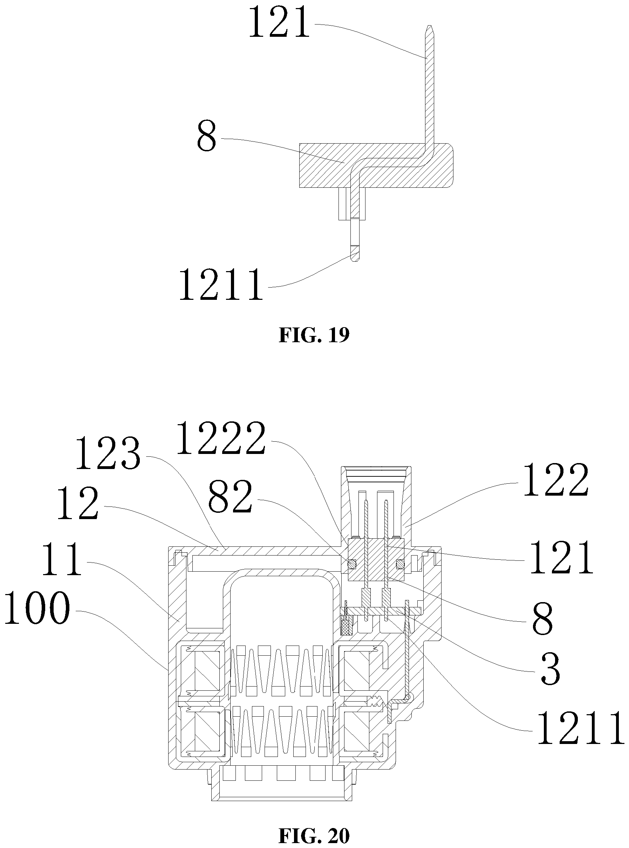

In conjunction with FIGS. 2 to 7, in the present embodiment, the second housing portion 12 further includes a plate body portion 123, and the second housing portion 12 is fixedly connected to the first housing portion 11 through the plate body portion 123. In the present embodiment, the plate body portion 123 and the insertion port portion 122 are integrally formed by injection molding. The number of the first connector 121 may be determined according to needs. For example, the number of the first connector 121may be 3, 4, or 5. A main body of each first connector 121 is made of a metallic material, which is conductive. During injection molding, the second housing portion 12 is integrally formed by injection molding with the first connectors 121 being injection molding inserts. A part of each first connector 121 between the first end portion 1211 and the second end portion 1212 of the first connector 121 is covered by an injection molding material. The first connectors 121 are fixedly connected to the insertion port portion 122 by injection molding. In the present embodiment, each first connector 121 includes a transition portion 1213, and at least a part of the transition portion 1213 is covered by the injection molding material. Alternatively, in other embodiments, the first connectors 121 may be fixed to the insertion port portion 122 in a way other than injection molding. The first connectors 121 may be preformed into a row by injection molding, i.e., formed into a pin header fixed by an injection molded connecting portion. The injection molded connecting portion covers the transition portions 1213 between the first end portions 1211 and the second end portions 1212, and the insertion port portion 122 is provided with multiple through holes for the first end portions 1211 to pass through, or provided with a through hole for the injection molded connecting portion to pass through. The connection strength and sealing between the first connectors 121 and the insertion port portion 122 may be further enhanced by adhesive bonding, welding or the like. In conjunction with FIGS. 14 to 19, in an embodiment where the first connectors 121 are preformed into a row by injection molding, the first connectors 121 are preformed into a row by injection molding to form an injection molding assembly 8. The injection molding assembly 8 includes the first connectors 121 and the injection molded connecting portion. The insertion port portion 122 is provided with multiple through holes 1222 for the first end portions 1211 of the first connectors 121 to pass through. Certainly, after the first end portions 1211 pass through the through holes 1222, gaps between the first end portions 1211 and the through holes may be sealed by adhesive bonding, welding, potting or the like, which can also enhance the connection strength. During assembling, the injection molding 8 and the electric control board 3 are assembled first. Then the second housing portion 12 is assembled with the first housing portion 11. When the second housing portion 12 is assembled, the first end portions 1211 of the first connectors 121 pass through the through holes 1222 of the insertion port portion 122. The first end portions 1211 are connected to the electric control board 3 by press-fit, and the first connectors 121 can be in electrical connections or signal connections to the electric control board 3. Other structures may refer to other embodiments described hereinabove or hereinafter. Referring to FIG. 20, in another embodiment where the first connectors 121 are preformed into a row by injection molding, the first connectors 121 are preformed into a row by injection molding to form an injection molding assembly 8. The injection molding assembly 8 includes the first connectors 121 and the injection molded connecting portion. The insertion port portion 122 is provided with a through hole 1222 for the injection molding assembly 8 to pass through. The injection molding assembly 8 passes through the through hole, and is connected to the insertion port portion 122 in a fixed or limited manner. During assembling, the injection molding assembly 8 and the second housing portion 12 are assembled first. After that, the injection molding assembly 8 and the second housing portion 12 are fit with the first housing portion 11 and the electric control board 3. A seal 82 may be further provided between the injection molding assembly 8 and the insertion port portion 122 for sealing. The first end portions 1211 are connected to the electric control board 3 by press-fitting, and the first connectors 121 can be in electrical connections or signal connections to the electric control board 3. Other structures may refer to other embodiments described hereinabove or hereinafter.

Referring to FIGS. 2 to 8, in the present embodiment, each first end portion 1211 is in a form of a press-fit pin. The first end portion 1211 is provided with a first eye portion 1214, and the first eye portion 1214 is provided with a first eye hole 1215. The electric control board 3 is provided with a first through hole 31, and the first end portion 1211 is connected to the electric control board 3 by press-fit through the first eye portion 1214. The first eye portion 1214 is press-fitted into the first through hole 31, making the first eye hole 1215 retracts and deforms, and the first eye portion 1214 is in interference fit with a wall of the first through hole 31 after press-fitting. The wall of the first through hole 31 is made of a metallic material, so that the first connector 121 can be electrically connected to the electric control board 3. With such arrangements, it is possible to simplify the connection between the first connectors 121 and the electric control board 3, thereby simplifying the mounting of the second housing portion 12 to the first housing portion 11.

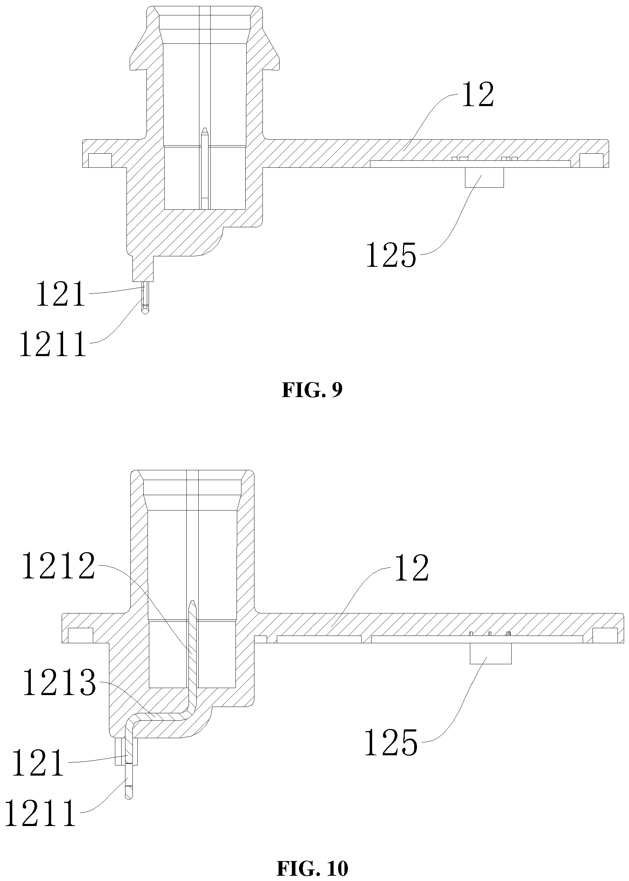

In conjunction with FIGS. 2, 3, and 7 to 10, in the present embodiment, the second housing portion 12 is provided with multiple limiting portions 124 that protrude downwards from a lower end face of the second housing portion 12. Specifically, in the present embodiment, the limiting portions 124 protrude downwards from a lower end face of the insertion port portion 122. Each of the limiting portions 124 is located between adjacent first end portions 1211 or relatively close to the first end portions 1211. When the first end portions 1211 are press-fitted on the electric control board 3 to a predetermined position, the limiting portions 124 abut against the electric control board 3, so as to ensure that the first end portions 1211 are press-fitted in place. In other embodiments, the limiting portions 124 may be formed by injection molding and cover an upper portion of the first end portions 1211.

Referring to FIGS. 2 to 7, in the present embodiment, the first housing portion 11 is further provided with a first support portion 111, a second support portion 112 and a third support portion 113. The first housing portion 11 further includes a first side wall portion 115, a second side wall portion 116 and a third side wall portion 117. The first side wall portion 115 and the second side wall portion 116 are arranged opposite to each other, and the third side wall portion 117 is connected to the first side wall portion 115 and the second side wall portion 116. The first support portion 111 is arranged close to the first side wall portion 115, and the second support portion 112 is arranged close to the second side wall portion 116. In the present embodiment, the first support portion 111 and the second support portion 112 are symmetric to each other, and the third support portion 113 is arranged close to the third side wall portion 117. The electric control board 3 abuts against the first support portion 111, the second support portion 112 and the third support portion 113, which are located at different positions to stably support the electric control board 3.

In conjunction with FIGS. 2 to 7, in the present embodiment, the first housing portion 11 further includes a fourth support portion 114, and the third support portion 113 is located between the first end portions 1211 and the third side wall portion 117. The third support portion 113 is located on one side of the first end portions 1211 close to the third side wall portion 117, and the fourth support portion 114 is located on the other side of the first end portion 1211 away from the third side wall portion 117. In other words, the third support portion 113 is located on a right side of the first end portions 1211 in FIG. 3, and the fourth support portion 114 is located on a left side of the first end portion 1211 in FIG. 3. The electric control board 3 abuts against the fourth support portion 114. The first housing portion 11 is provided with a first groove 118 that is located between the third support portion 113 and the fourth support portion 114, and a part of each first end portion 1211 passing out of the electric control board 3 is accommodated in the first groove 118. With such arrangements, the first end portions 1211 will not be interfered with. Furthermore, the third support portion 113 and the fourth support portion 114 are both provided, so that the electric control board 3 can be prevented from being damaged by pressure during press-fitting. In the present embodiment, an opening of the insertion port portion 122 faces upwards. As such, the coil assembly 100 has a shorter length in the horizontal direction, and a female connector of the external device in cooperation with the insertion port portion 122 can be fit with the insertion port portion 122 in a downward direction, which can prevent the coil assembly 100 from interfering with components in the horizontal direction. Alternatively, in other embodiments, the opening of the insertion port portion 122 may faces horizontally according to needs.

In conjunction with FIGS. 2 to 7, in the present embodiment, the first housing portion 11 further includes multiple positioning portions 1111 that are arranged close to the third side wall portion 117. The electric control board 3 is provided with a positioning groove 32, and a part of each positioning portion 1111 is accommodated in the positioning groove 32. The positioning portions 1111 cooperate with the positioning groove 32 to provide positioning for the mounting of the electric control board 3, so as to improve the mounting precision of the electric control board 3. In the present embodiment, the number of the positioning portions 1111 is two, and the two positioning portions 1111 are symmetric to each other, which is beneficial to balancing the external forces applied on the electric control board 3.

In conjunction with FIGS. 2 to 7, in the present embodiment, the first housing portion 11 is provided with multiple positioning columns 119, and the second housing portion 12 is provided with positioning hole columns 125, the number of which is the same as the number of the positioning columns 119. Each of the positioning hole columns 125 is provided with a positioning hole (not shown in the drawings) with an opening facing downwards. The positioning hole columns 125 are located on the lower end face of the second housing portion 12, and an upper end portion of each of the positioning columns 119 is located in a corresponding one of the positioning holes. The positioning column 119 is in contact or clearance fit with a side wall of the corresponding positioning hole to limit relative positions of the first housing portion 11 and the second housing portion 12 in the horizontal direction. In the present embodiment, the number of the positioning columns 119 is two, and the two positioning columns 119 are symmetric to each other. In another embodiment, the positioning hole columns 125 may not be provided, and recessed positioning holes are directly formed on a lower surface of the second housing portion 12.

Referring to FIGS. 2 to 7 for the present embodiment, in a second embodiment of the coil assembly 100, compared with the first embodiment, in the present embodiment, each first end portion 1211 is columnar. A guide portion is provided at an end of the first end portion 1211 close to the electric control board 3, and the electric control board 3 is provided with first through holes 31. The first end portion 1211 is connected to the electric control board 3 by press-fit. The first end portion 1211 is press-fitted into a corresponding one of the first through holes 31, and is in interference fit with a wall of the corresponding first through hole 31. An outer diameter of the guide portion decreases in a direction towards the electric control board 3, and the guide portion guides the press-fitting of the first end portion 1211.

Referring to FIGS. 2 to 7 for the present embodiment, in a third embodiment of the coil assembly 100, compared with the first embodiment, in the present embodiment, the electric control board 3 is provided with elastic sockets (not shown in the drawings). The first end portion 1211 is connected to the electric control board 3 by press-fitting through a corresponding one of the elastic sockets. The first end portion 1211 is press-fitted into the elastic socket, making the elastic socket expand, and the first end portion 1211 is in tight contact with an inner wall of the elastic socket. For example, the elastic socket may consist of multiple elastic metal sheets forming a structure that has a flower-like shape.

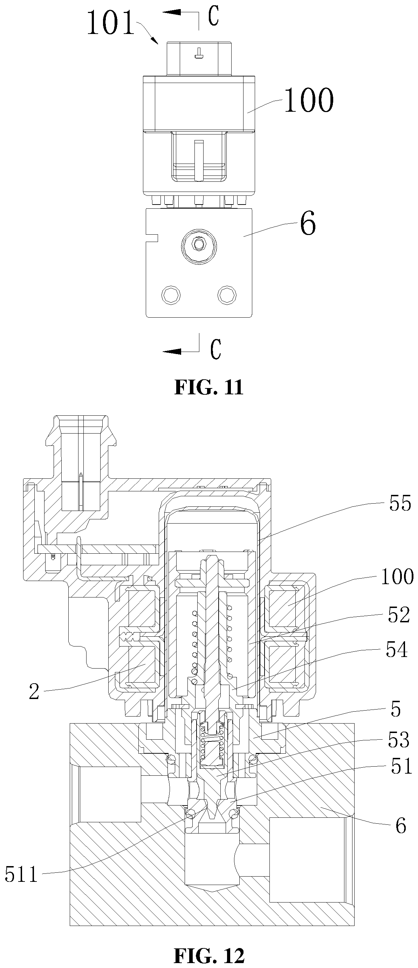

In conjunction with FIGS. 11 and 12, an embodiment of an electric valve 101 is further provided according to the present application. The electric valve 101 includes the above coil assembly 100, and further includes a valve component 5 and a valve body block 6 that are fixedly connected to each other. The coil assembly 100 is connected to the valve body block 6 in a fixed or detachable manner. The fixed connection includes a connection by a screw, a fixation by engagement and the like. Alternatively, the coil assembly 100 is fixedly connected to the valve component 5. The coil assembly 100 and the valve component 5, as a whole, are connected to the valve body block 6 in a fixed or detachable manner. The valve component 5 includes a valve seat component 51, a rotor assembly 52, a valve core assembly 53, a nut assembly 54, and a sleeve 55. The valve core assembly 53 is connected to the rotor assembly 52. The stator component 2 is located on an outer side of the sleeve 55, and the rotor assembly 52 is located on an inner side of the sleeve 55. A preset current flowing through the stator component 2 generates an excitation magnetic field, which drives the rotor assembly 52 to rotate, and the rotor assembly 52 drives the valve core assembly 53 to rotate. The valve core assembly 53 is in threaded fit with the nut assembly 54, so that the rotation of the rotor assembly 52 is converted into an axial movement of the valve core assembly 53 relative to the valve seat component 51. The valve seat component 51 is provided with a valve port 511. The valve core assembly 53 can regulate a flow area of the valve port 511, thereby regulating a flow rate of a working medium flowing through the valve port 511. Referring to FIG. 13, in an embodiment of the present application, the electric valve further includes a connecting component 7, and the connecting component 7 includes a connecting plate 71 and an engagement portion 72. The connecting plate 71 is fixedly connected to the coil assembly 100 by hot riveting, ultrasonic welding or the like. The engagement portion 72 is elastic, and the connecting component 7 is detachably connected to the valve body block 6 through the engagement portion 72. The engagement portion 72 includes a hook 721 and a disconnection portion 722. The hook 721 is in fit with the valve body block 6 to prevent the coil assembly 100 from being separated from the valve body block 6. An external tool cooperates with the disconnection portion 722 to pull up the engagement portion 72, so that the coil assembly 100 can be separated from the valve body block 6.

In the present embodiment, the valve body block 6 is formed separately. Alternatively, in other embodiments, the valve body block 6 may be a part of another component, such as a part of a connecting part of an integrated assembly, or a part of a heat exchange assembly.

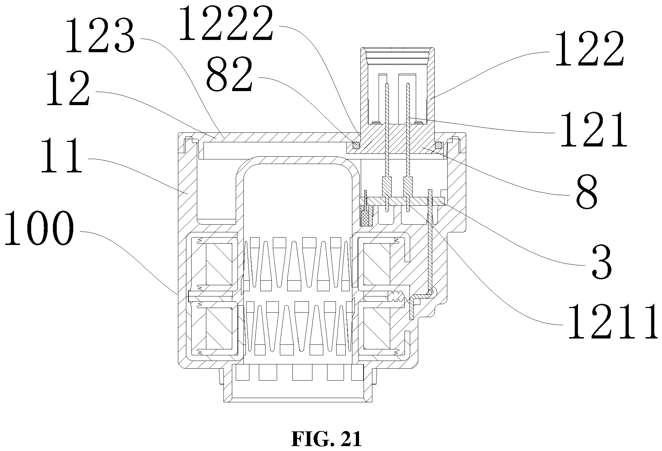

Referring to FIG. 21, in further another embodiment of the coil assembly 100, the second housing portion 12 includes a plate body portion 123 and an insertion port portion 122. The second housing portion 12 is fixedly connected to the first housing portion 11 through the plate body portion 123. The plate body portion 123 and the insertion port portion 122 are separate structures that are fixedly connected to each other by welding, riveting, or both riveting and welding, or riveting in combination with adhesive bonding, etc. The plate body portion 123 is provided with a through hole 1222, and the insertion port portion 122 can pass through the plate body portion 123. A seal 82 may be further provided between the insertion port portion 122 and the plate body portion 123 for sealing. The insertion port portion 122 is formed by injection molding with the first connectors 121 being injection molding inserts, and a part between the first end portion 1211 and the second end portion 1212 is covered by the injection molding material. The first end portions 1211 are connected to the electric control board 3 by press-fitting, and the first connectors 121 can be in electrical connections or signal connections to the electric control board 3. If the first connectors 121 are damaged, only the second housing portion 12, including the insertion port portion 122 and the first connectors 121, needs to be replaced. In this way, the maintenance cost is reduced, and the maintenance of the coil assembly 100 is facilitated. If the number of first connectors 121 needs to be changed, only the second housing portion 12, including the insertion port portion 122 and the first connectors 121, needs to be redesigned. There is no need to redevelop a new product, which helps to reduce the development cost.

It should be noted that, the above embodiments are only used to illustrate the present application, and are not intended to limit the technical solutions described in the present application. Although the present application is described in detail in this specification with reference to the above embodiments, it may be appreciated by those skilled in the art that, modifications or equivalent substitutions may be made to the present application by those skilled in the art, and all the technical solutions and improvements thereof without departing from the spirit and scope of the present application are deemed to fall into the scope of the present application defined by the claims.

## Claims

1. A coil assembly, comprising:
a control box;
a stator component; and
an electric control board, wherein
the control box is provided with a first chamber, the electric control board is located in the first chamber, and the stator component is provided with a first insertion pin that is connected to the electric control board;
the control box comprises a first housing portion and a second housing portion that are fixedly connected to each other, the second housing portion comprises an insertion port portion and a first connector, and the insertion port portion is provided with a second chamber;
the first connector is provided with a first end portion and a second end portion, a part of the first end portion is located in the first chamber, and a part of the second end portion is located in the second chamber; and
the first end portion is connected to the electric control board by press-fit, and the first connector is configured to be in an electrical connection or a signal connection to the electric control board.

2. The coil assembly according to claim 1, wherein
the first end portion is provided with a first eye portion, and the first eye portion is provided with a first eye hole;
the electric control board is provided with a first through hole, and the first end portion is connected to the electric control board by press-fit through the first eye portion; and
the first eye portion is press-fitted into the first through hole, making the first eye hole retract and deform, and the first eye portion is in interference fit with a wall of the first through hole.

3. The coil assembly according to claim 1, wherein
the first end portion is columnar, and a guide portion is provided at an end of the first end portion close to the electric control board;
the electric control board is provided with a first through hole, and the first end portion is connected to the electric control board by press-fit;
the first end portion is press-fitted into the first through hole, and is in interference fit with a wall of the first through hole; and
an outer diameter of the guide portion decreases in a direction towards the electric control board, and the guide portion is configured to guide the press-fitting of the first end portion.

4. The coil assembly according to claim 1, wherein
the electric control board is provided with an elastic socket, and the first end portion is connected to the electric control board by press-fit through the elastic socket; and
the first end portion is press-fitted into the elastic socket, making the elastic socket expand, and the first end portion is in tight contact with an inner wall of the elastic socket.

5. The coil assembly according to any one of claims 1 to 4, wherein
the first housing portion and the second housing portion are fixed to each other by welding, and are sealed by a welding surface or by both a welding surface and a seal; or
the first housing portion and the second housing portion are fixed to each other by snap-fit, and are sealed by a seal.

6. The coil assembly according to claim 5, wherein
the second housing portion further comprises a plate body portion, and is fixedly connected to the first housing portion through the plate body portion;
the plate body portion and the insertion port portion are integrally formed by injection molding; and
the second housing portion is integrally formed by injection molding with the first connector being an injection molding insert, and a part of the first connector between the first end portion and the second end portion is covered by an injection molding material.

7. The coil assembly according to claim 5, wherein
the second housing portion further comprises a plate body portion, and is fixedly connected to the first housing portion through the plate body portion;
the plate body portion and the insertion port portion are integrally formed by injection molding;
the first connector is preformed into a row by injection molding, and an injection molded connecting portion is formed by the injection molding; and
the insertion port portion is provided with a plurality of through holes for the first end portion to pass through, or provided with a through hole for the injection molded connecting portion to pass through.

8. The coil assembly according to claim 6 or 7, wherein
the first housing portion is further provided with a first support portion, a second support portion and a third support portion, and the first housing portion further comprises a first side wall portion, a second side wall portion and a third side wall portion;
the first side wall portion and the second side wall portion are arranged opposite to each other, and the third side wall portion is connected to the first side wall portion and the second side wall portion;
the first support portion is arranged close to the first side wall portion, the second support portion is arranged close to the second side wall portion, and the third support portion is arranged close to the third side wall portion; and
the electric control board abuts against the first support portion, the second support portion and the third support portion.

9. The coil assembly according to claim 8, wherein
the first housing portion further comprises a fourth support portion, the third support portion is located on one side of the first end portion close to the third side wall portion, and the fourth support portion is located on the other side of the first end portion away from the third side wall portion;
the electric control board abuts against the fourth support portion; and
the first housing portion is provided with a first groove that is located between the third support portion and the fourth support portion, and a part of the first end portion passing out of the electric control board is accommodated in the first groove.

10. The coil assembly according to any one of claims 6 to 9, wherein an opening of the insertion port portion faces upwards or horizontally.

11. The coil assembly according to claim 10, wherein
the first housing portion is provided with a plurality of positioning columns, and the second housing portion is provided with positioning holes that has the same number as the number of the positioning columns;
the positioning holes are located on a lower end face of the second housing portion, and an upper end portion of each of the plurality of positioning columns is located in a corresponding one of the positioning holes; and
the positioning column is in contact or clearance fit with a side wall of the corresponding positioning hole to limit relative horizontal positions of the first housing portion and the second housing portion.

12. The coil assembly according to claim 10, wherein
the second housing portion is provided with a plurality of limiting portions that protrude downwards from a lower end face of the second housing portion;
each of the plurality of limiting portions is located between adjacent first end portions or close to the first end portion; and
the first end portion is press-fitted into the electric control board to a predetermined position, and the plurality of limiting portions abut against the electric control board.

13. The coil assembly according to claim 11, wherein
the second housing portion is provided with a plurality of limiting portions that protrude downwards from the lower end face of the second housing portion;
each of the plurality of limiting portions is located between adjacent first end portions or close to the first end portion; and
the first end portion is press-fitted into the electric control board to a predetermined position, and the plurality of limiting portions abut against the electric control board.

14. The coil assembly according to claim 5, wherein
the second housing portion further comprises a plate body portion and the insertion port portion, and is fixedly connected to the first housing portion through the plate body portion;
the plate body portion and the insertion port portion are separate structures that are fixedly connected to each other; and
the insertion port portion is formed by injection molding with the first connector being an injection molding insert, and a part of the first connector between the first end portion and the second end portion is covered by an injection molding material.

15. An electric valve, comprising the coil assembly according to any one of claims 1 to 14, wherein the electric valve further comprises a valve component and a valve body block, the valve component is fixedly connected to the valve body block, and the coil assembly is connected to the valve body block or the valve component in a fixed or detachable manner.
